# DEMANDE DE BREVET EUROPEEN

(11) **EP 4 059 392 A1**
(43) Date de publication de la demande: **21.09.2022**
(21) Numéro de dépôt: 22161974.5
(22) Date de dépôt: 14.03.2022
(51) Int. Cl.: A47J 43/28

(54) **PINCE POUR PRODUITS ALIMENTAIRES POURVUE D'UN DISPOSITIF DE MESURE D'ÉPAISSEUR D'ALIMENT**

(30) Priorité: 16.03.2021 FR 2102570
(71) Demandeur: SEB S.A., 69130 Ecully (FR)
(72) Inventeur: FORNECKER, Florent, 69620 VAL D'OINGT (FR); VOLATIER, Sébastien, 21000 DIJON (FR)
(74) Mandataire: SEB Développement

(57) **Abrégé**

La pince (2) comprend un premier bras (3) comprenant une première partie de préhension (4) et une première partie de pincement (5) et un deuxième bras (6) comprenant une deuxième partie de préhension (7) et une deuxième partie de pincement (8), les première et deuxième parties de préhension (4, 7) étant montées mobiles l'une par rapport à l'autre et étant configurées pour occuper une configuration écartée dans laquelle les première et deuxième parties de pincement (5, 8) sont écartées l'une de l'autre et au moins une configuration de pincement dans laquelle les première et deuxième parties de pincement (5, 8) sont rapprochées l'une de l'autre et sont configurées pour pincer un aliment ; et un dispositif de mesure (13) configuré pour déterminer une caractéristique représentative de l'épaisseur d'un aliment pincé entre les première et deuxième parties de pincement (5, 8).

## Description

### Domaine technique

La présente invention concerne de manière générale une pince pour produits alimentaires.

### Etat de la technique

Le document WO2018/087486 divulgue un appareil de cuisson, de type gril électrique, comprenant :
- une partie inférieure comportant une plaque de cuisson inférieure,
- une partie supérieure comportant une plaque de cuisson supérieure,
- un élément d'articulation reliant la partie supérieure à la partie inférieure et configuré de telle sorte que la partie supérieure est montée articulée par rapport à la partie inférieure pour définir au moins une position de chargement dans laquelle un aliment peut être placé entre la plaque de cuisson inférieure et la plaque de cuisson supérieure et au moins une position de cuisson dans laquelle l'aliment est enserré entre la plaque de cuisson inférieure et la plaque de cuisson supérieure,
- un dispositif de mesure configuré pour déterminer un écartement entre la plaque de cuisson inférieure et la plaque de cuisson supérieure, et donc pour déterminer l'épaisseur de l'aliment disposé entre les plaques de cuisson inférieure et supérieure, et
- une unité de gestion de cuisson configurée pour gérer la cuisson de l'aliment en fonction de l'écartement déterminé par le dispositif de mesure.

Une telle configuration de l'appareil de cuisson précité permet de déterminer automatiquement le temps de cuisson d'un aliment disposé sur la plaque de cuisson inférieure en fonction de l'épaisseur de l'aliment, et donc d'assurer une cuisson satisfaisante de cet aliment.

Cependant, la configuration du dispositif de mesure équipant l'appareil de cuisson précité augmente sensiblement les coûts de fabrication de ce dernier. De plus, un tel dispositif de mesure ne permet pas le suivi de la cuisson d'aliments différents et/ou d'épaisseurs différentes cuits simultanément dans cet appareil.

### Résumé de l'invention

La présente invention vise à remédier à tout ou partie de ces inconvénients.

Le problème technique à la base de l'invention consiste notamment à fournir un dispositif qui soit de structure simple, économique et fiable et qui permette de déterminer aisément l'épaisseur d'un aliment à cuire.

A cet effet, la présente invention concerne une pince pour produits alimentaires, comprenant :
- un premier bras comprenant une première partie de préhension et une première partie de pincement et un deuxième bras comprenant une deuxième partie de préhension et une deuxième partie de pincement, les première et deuxième parties de préhension étant montées mobiles l'une par rapport à l'autre et étant configurées pour occuper une configuration écartée dans laquelle les première et deuxième parties de pincement sont écartées l'une de l'autre et au moins une configuration de pincement dans laquelle les première et deuxième parties de pincement sont rapprochées l'une de l'autre et sont configurées pour pincer un aliment, et
- un dispositif de mesure configuré pour déterminer une caractéristique représentative de l'épaisseur d'un aliment pincé entre les première et deuxième parties de pincement.

Une telle configuration de la pince selon la présente invention permet de déterminer automatiquement l'épaisseur d'un aliment disposé entre les première et deuxième parties de pincement en fonction de la configuration occupée par les première et deuxième parties de préhension, et ensuite de déterminer automatiquement le temps de cuisson dudit aliment par l'intermédiaire d'une unité de commande et de contrôle qui est directement prévue sur la pince ou qui est déportée par rapport à la pince, et par exemple prévue sur un appareil de cuisson électrique ou sur un terminal de l'utilisateur.

Ainsi, la pince selon la présente invention permet de déterminer automatiquement le temps de cuisson d'un aliment à partir d'une mesure réalisée à l'aide d'un dispositif de structure simple, économique et fiable et éventuellement de données complémentaires renseignées par l'utilisateur sur l'unité de commande et de contrôle, telle que la nature de l'aliment à cuire et la température de cuisson.

De plus, le fait de déporter la mesure de la caractéristique représentative de l'épaisseur de l'aliment à cuire directement sur une pince pour produits alimentaires, permet d'utiliser ladite pince avec un appareil de cuisson électrique de conception simplifiée et donc plus fiable et moins onéreuse. En particulier, la pince selon la présente invention peut avantageusement être utilisée pour la cuisson d'aliments sur des grils présentant une seule face de cuisson.

La pince peut en outre présenter une ou plusieurs des caractéristiques suivantes, prises seules ou en combinaison.

Selon un mode de réalisation de l'invention, la caractéristique déterminée par le dispositif de mesure est un écartement entre les premier et deuxième bras, et par exemple entre les première et deuxième parties de pincement ou entre les première et deuxième parties de préhension, et par exemple entre des première et deuxième zones de mesure prévues respectivement sur les première et deuxième parties de préhension.

Selon un mode de réalisation de l'invention, le dispositif de mesure comporte un dispositif de détection électromagnétique, en particulier à effet Hall.

Selon un mode de réalisation de l'invention, le dispositif de détection électromagnétique comporte un capteur à effet Hall fixé à l'un des premier et deuxième bras, et un aimant permanent fixé à l'autre des premier et deuxième bras.

Selon un mode de réalisation de l'invention, l'aimant permanent est configuré pour être situé en regard du capteur à effet Hall lorsque les première et deuxième parties de préhension occupent une configuration de pincement.

Selon un mode de réalisation de l'invention, l'aimant permanent est fixé à l'une des première et deuxième parties de préhension.

Selon un autre mode de réalisation de l'invention, le dispositif de mesure comporte un potentiomètre, tel qu'un potentiomètre linéaire ou rotatif.

Selon un autre mode de réalisation de l'invention, le dispositif de mesure comporte une jauge de contrainte située à proximité des extrémités des premier et deuxième bras qui sont situées à l'opposé des première et deuxième parties de pincement.

Selon un mode de réalisation de l'invention, les première et deuxième parties de préhension sont montées articulées l'une par rapport à l'autre au moyen d'une liaison pivot.

Selon un mode de réalisation de l'invention, la première partie de préhension est disposée entre la première partie de pincement et la liaison pivot, et la deuxième partie de préhension est disposée entre la deuxième partie de pincement et la liaison pivot.

Selon un mode de réalisation de l'invention, la première partie de pincement est prévue sur une portion d'extrémité du premier bras qui est située à l'opposé de la liaison pivot, et la deuxième partie de pincement est prévue sur une portion d'extrémité du deuxième bras qui est située à l'opposé de la liaison pivot.

Selon un mode de réalisation de l'invention, le dispositif de mesure est plus proche de la liaison pivot que des portions d'extrémité des premier et deuxième bras qui sont situées à l'opposé de la liaison pivot.

Selon un mode de réalisation de l'invention, la pince comporte une interface utilisateur comportant un afficheur et un bouton marche/arrêt configuré pour commander une alimentation électrique de la pince.

Selon un mode de réalisation de l'invention, l'interface utilisateur comporte un bouton de commande ou une touche de commande configuré(e) pour commander une mesure de la caractéristique représentative de l'épaisseur d'un aliment pincé entre les première et deuxième parties de pincement.

Selon un mode de réalisation de l'invention, l'interface utilisateur de la pince comporte des moyens permettant à l'utilisateur de sélectionner un type d'aliment à cuire et/ou une température de cuisson.

Selon un mode de réalisation de l'invention, l'afficheur est configuré pour afficher une durée de cuisson restante d'au moins un aliment et/ou un état de cuisson d'au moins un aliment, ou pour afficher un contenu relatif à la durée de cuisson restante d'au moins un aliment et/ou un contenu relatif à un état de cuisson d'au moins un aliment.

Selon un mode de réalisation de l'invention, la pince est configurée pour être appairée à un appareil de cuisson électrique.

Selon un mode de réalisation de l'invention, la pince comporte une unité de communication apte à échanger des informations avec un module de communication d'un appareil de cuisson, avantageusement électrique, selon un protocole de communication, l'unité de communication étant configurée pour émettre, à destination du module de communication, au moins une information de mesure comprenant une indication de l'épaisseur d'un aliment pincé entre les première et deuxième parties de pincement ou une indication de la caractéristique mesurée.

Selon un mode de réalisation, le protocole de communication est un protocole de communication sans fil, tel qu'un protocole de communication radiofréquence, par exemple du type WiFi.

Selon un mode de réalisation de l'invention, l'unité de communication est configurée pour recevoir au moins une information de retour en provenance du module de communication, l'au moins une information de retour comprenant une indication du temps de cuisson d'un aliment et/ou de la durée de cuisson restante d'un aliment et/ou de l'état de cuisson d'un aliment.

Selon un mode de réalisation de l'invention, l'unité de communication est configurée pour recevoir une notification de début de cuisson en provenance du module de communication de l'appareil de cuisson électrique, et l'interface utilisateur est configurée pour émettre un signal d'avertissement de début de cuisson lorsqu'une notification de début de cuisson est reçue par l'unité de communication, de manière à avertir un utilisateur qu'il peut disposer un aliment à cuire sur un emplacement de cuisson de l'appareil de cuisson électrique.

Selon un mode de réalisation de l'invention, l'unité de communication est configurée pour recevoir une notification de retournement d'aliment en provenance du module de communication de l'appareil de cuisson électrique, et l'interface utilisateur est configurée pour émettre un signal d'avertissement de retournement lorsqu'une notification de retournement d'aliment est reçue par l'unité de communication, de manière à avertir un utilisateur qu'il doit retourner un aliment en cours de cuisson sur l'emplacement de cuisson de l'appareil de cuisson électrique.

Selon un mode de réalisation de l'invention, l'unité de communication est configurée pour recevoir une notification de fin de cuisson en provenance du module de communication de l'appareil de cuisson électrique, et l'interface utilisateur est configurée pour émettre un signal d'avertissement de fin de cuisson lorsqu'une notification de fin de cuisson est reçue par l'unité de communication, de manière à avertir un utilisateur qu'un aliment est cuit et que l'aliment peut être retiré de l'emplacement de cuisson de l'appareil de cuisson électrique.

Selon un mode de réalisation de l'invention, l'afficheur de l'interface utilisateur est configuré pour afficher le signal d'avertissement de début de cuisson et/ou le signal d'avertissement de retournement et/ou le signal d'avertissement de fin de cuisson.

Selon un mode de réalisation de l'invention, au moins l'un du signal d'avertissement de début de cuisson, du signal d'avertissement de retournement et du signal d'avertissement de fin de cuisson est sonore.

Selon un mode de réalisation de l'invention, la pince comporte une unité de commande et de contrôle configurée pour commander et contrôler la pince.

Selon un mode de réalisation de l'invention, l'unité de commande et de contrôle de la pince est configurée pour commander et contrôler l'unité de communication et l'interface utilisateur.

Selon un mode de réalisation de l'invention, la pince est autonome.

Selon un mode de réalisation de l'invention, l'unité de commande et de contrôle de la pince est configurée pour déterminer un temps de cuisson d'un aliment en fonction de la caractéristique mesurée par le dispositif de mesure.

Selon un mode de réalisation de l'invention, la pince comporte un capteur de température configuré pour mesurer une température d'un emplacement de cuisson sur lequel est destiné à être disposé un aliment à cuire.

Selon un mode de réalisation de l'invention, le capteur de température est fixé à l'un des premier et deuxième bras.

Selon un mode de réalisation de l'invention, la pince comporte un dispositif de mesure de température qui est fixé de manière amovible à l'un des premier et deuxième bras, le dispositif de mesure de température comportant le capteur de température et un module de communication, la pince comprenant une unité de communication apte à échanger des informations avec le module de communication du dispositif de mesure de température lorsque le module de communication est positionné sur un emplacement de cuisson d'un appareil de cuisson.

Selon un mode de réalisation de l'invention, l'unité de commande et de contrôle de la pince est configurée pour déterminer le temps de cuisson d'un aliment en fonction de la caractéristique mesurée et d'une température mesurée par le capteur de température.

Selon un mode de réalisation de l'invention, la pince comporte un boîtier de protection monté sur l'un des premier et deuxième bras, le dispositif de mesure étant au moins en partie logé dans le boîtier de protection.

Selon un mode de réalisation de l'invention, le boîtier de protection est monté sur l'une des première et deuxième parties de préhension.

Selon un mode de réalisation de l'invention, le boîtier de protection est étanche.

Selon un mode de réalisation de l'invention, le boîtier de protection est monté de manière amovible sur l'un des premier et deuxième bras.

Selon un mode de réalisation de l'invention, le capteurà effet Hall est logé dans le boîtier de protection.

Selon un mode de réalisation de l'invention, l'unité de commande et de contrôle et/ou l'unité de communication est/sont logée(s) dans le boîtier de protection.

Selon un mode de réalisation de l'invention, l'interface utilisateur est prévue sur le boîtier de protection.

Selon un mode de réalisation de l'invention, la pince comporte un élément de sollicitation configuré pour solliciter les première et deuxième parties de préhension vers la configuration écartée.

Selon un mode de réalisation de l'invention, la pince comporte une batterie configurée pour alimenter électriquement la pince.

La présente invention concerne en outre un système de cuisson comprenant une pince selon l'une quelconque des caractéristiques précédentes, et un appareil de cuisson électrique pour la cuisson de produits alimentaires, l'appareil de cuisson électrique comprenant un emplacement de cuisson configuré pour recevoir un aliment et un dispositif de chauffage configuré pour chauffer un aliment reçu sur l'emplacement de cuisson.

Selon un mode de réalisation de l'invention, l'appareil de cuisson électrique comporte une unité de commande et de contrôle configurée pour contrôler le fonctionnement du dispositif de chauffage.

Selon un mode de réalisation de l'invention, l'unité de commande et de contrôle de l'appareil de cuisson électrique est configurée pour déterminer un temps de cuisson d'un aliment en fonction de la caractéristique mesurée par le dispositif de mesure.

Selon un mode de réalisation, l'unité de commande et de contrôle de l'appareil de cuisson électrique est configurée pour contrôler le fonctionnement du dispositif de chauffage, et par exemple pour réguler la durée de chauffage et/ou la température de chauffage du dispositif de chauffage, en fonction du temps de cuisson déterminé.

Selon un mode de réalisation, l'appareil de cuisson électrique comprend une plaque de cuisson comprenant l'emplacement de cuisson

Selon un mode de réalisation de l'invention, l'appareil de cuisson électrique est un barbecue électrique, un gril électrique, une plancha ou tout type d'appareil de cuisson par contact.

### Brève description des figures

L'invention sera bien comprise à l'aide de la description qui suit en référence aux dessins schématiques annexés représentant, à titre d'exemple non limitatif, une forme d'exécution de cette pince.
[Fig 1] La figure 1 est une vue de côté d'une pince selon la présente invention.
[Fig 2] La figure 2 est une vue en perspective de dessus de la pince de la figure 1.
[Fig 3] La figure 3 est une vue éclatée en perspective de la pince de la figure 1.

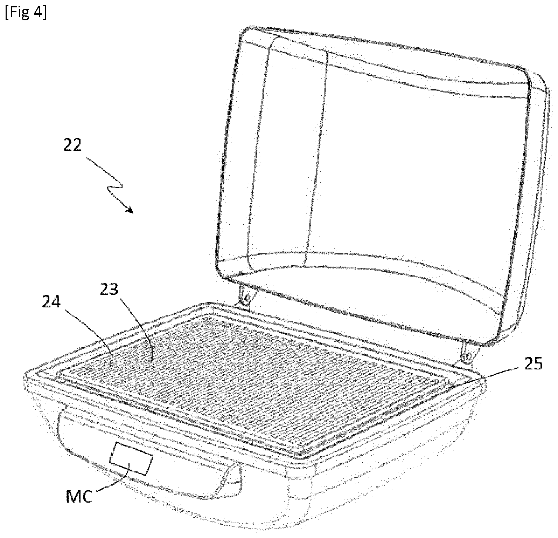

[Fig 4] La figure 4 est une vue en perspective d'un appareil de cuisson électrique auquel est destinée à être appairée la pince de la figure 1.

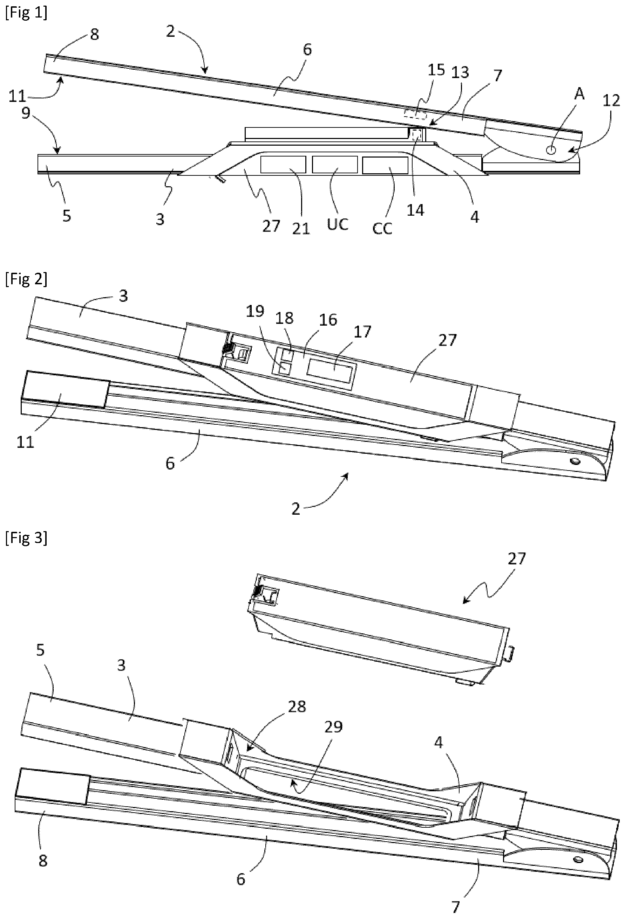

Les figures 1 à 3 représentent une pince 2 pour produits alimentaires, et par exemple une pince pour barbecue.

La pince 2 comprend un premier bras 3 comprenant une première partie de préhension 4 et une première partie de pincement 5 s'étendant dans le prolongement de la première partie de préhension 4, et un deuxième bras 6 comprenant une deuxième partie de préhension 7 et une deuxième partie de pincement 8 s'étendant dans le prolongement de la deuxième partie de préhension 7. Les première et deuxième parties de pincement 5, 8 comportent respectivement une première surface de contact 9 et une deuxième surface de contact 11. Selon le mode de réalisation représenté sur les figures 1 à 3, les première et deuxième surfaces de contact 9, 11 sont planes. Cependant, les première et deuxième surfaces de contact 9, 11 pourraient présenter une toute autre forme adaptée à la préhension des aliments sans sortir du cadre de la présente invention.

Les première et deuxième parties de préhension 4, 7 sont montées articulées l'une par rapport à l'autre au moyen d'une liaison pivot 12 définissant un axe d'articulation A. Selon le mode de réalisation représenté sur les figures, la première partie de pincement 5 est prévue sur une portion d'extrémité du premier bras 3 qui est située à l'opposé de la liaison pivot 12, et la deuxième partie de pincement 8 est prévue sur une portion d'extrémité du deuxième bras 6 qui est située à l'opposé de la liaison pivot 12.

Les première et deuxième parties de préhension 4, 7 sont configurées pour occuper une configuration écartée dans laquelle les première et deuxième parties de pincement 5, 8 sont écartées l'une de l'autre et un aliment est apte à être disposé entre les première et deuxième parties de pincement 5, 8, et une pluralité de configurations de pincement dans chacune desquelles les première et deuxième parties de pincement 5, 8 sont rapprochées l'une de l'autre et sont configurées pour pincer un aliment disposé entre les première et deuxième parties de pincement 5, 8. La configuration de pincement occupée par les première et deuxième parties de pincement 5, 8 dépend de l'épaisseur de l'aliment interposé entre les première et deuxième parties de pincement 5, 8.

De façon avantageuse, la pince 2 comporte un élément de sollicitation (non représenté sur les figures) configuré pour solliciter les première et deuxième parties de préhension 4, 7 vers la configuration écartée.

La pince 2 comprend en outre un dispositif de mesure 13 configuré pour déterminer une caractéristique représentative de l'épaisseur d'un aliment pincé entre les première et deuxième parties de pincement 5, 8. La caractéristique déterminée par le dispositif de mesure 13 peut par exemple être l'écartement entre les première et deuxième parties de pincement 5, 8 ou l'écartement entre des première et deuxième zones de mesure prévues respectivement sur les première et deuxième parties de préhension 4, 7.

De façon avantageuse, le dispositif de mesure 13 est plus proche de la liaisons pivot 12 que des portions d'extrémité des premier et deuxième bras 3, 6 qui sont situées à l'opposé de la liaison pivot 12.

Selon le mode de réalisation représenté sur les figures, le dispositif de mesure 13 comporte un dispositif de détection électromagnétique, en particulier à effet Hall. De façon avantageuse, le dispositif de détection électromagnétique comporte un capteur à effet Hall 14 fixé au premier bras 3 et plus particulièrement à la première partie de préhension 4, et un aimant permanent 15 fixé au deuxième bras 6 et plus particulièrement à la deuxième partie de préhension 7. Cependant, le capteur à effet Hall 14 pourrait être fixé au deuxième bras 6, et l'aimant permanent 15 pourrait être fixé au premier bras 3 sans sortir du cadre de la présente invention.

L'aimant permanent 15 est plus particulièrement configuré pour être situé en regard du capteur à effet Hall 14 lorsque les première et deuxième parties de préhension occupent une configuration de pincement.

La pince 2 comporte également une interface utilisateur 16 par exemple prévue sur le premier bras 3. L'interface utilisateur 16 comporte notamment un afficheur 17, un bouton marche/arrêt 18 configuré pour commander une alimentation électrique de la pince 2, et un bouton de commande 19 configuré pour commander une mesure de la caractéristique représentative de l'épaisseur d'un aliment pincé entre les première et deuxième parties de pincement 5, 8.

Comme schématisé sur la figure 1, la pince 2 comporte également une batterie 21 configurée pour alimenter électriquement la pince 2.

Selon le mode de réalisation représenté sur les figures, la pince 2 est configurée pour être appairée à un appareil de cuisson électrique 22 pour la cuisson de produits alimentaires, tel qu'un barbecue électrique ou un gril électrique. L'appareil de cuisson électrique 22 comprend notamment une plaque de cuisson 23 comportant un emplacement de cuisson 24 configuré pour recevoir un aliment à cuire, et un dispositif de chauffage 25 configuré pour chauffer un aliment reçu sur l'emplacement de cuisson 24. De façon avantageuse, l'appareil de cuisson électrique 22 comporte en outre une unité de commande et de contrôle qui est configurée pour déterminer un temps de cuisson d'un aliment en fonction de la caractéristique mesurée par le dispositif de mesure 13 de la pince 2, et pour contrôler le fonctionnement du dispositif de chauffage 25, et par exemple pour réguler la durée de chauffage et la température de chauffage du dispositif de chauffage 25, en fonction du temps de cuisson déterminé.

Ainsi, la pince 2 comporte de plus une unité de communication UC qui est pourvue d'une carte de communication et qui est apte à échanger des informations avec un module de communication MC de l'appareil de cuisson électrique 22 selon un protocole de communication sans fil, tel qu'un protocole de communication radiofréquence, par exemple du type WiFi.

L'unité de communication UC est avantageusement configurée pour émettre, à destination du module de communication MC de l'appareil de cuisson électrique 22, une information de mesure comprenant une indication de l'épaisseur d'un aliment pincé entre les première et deuxième parties de pincement 5, 8 ou une indication de la caractéristique mesurée par le dispositif de mesure 13.

L'unité de communication UC est également configurée pour recevoir une pluralité d'informations de retour en provenance du module de communication MC de l'appareil de cuisson électrique 22. Les informations de retour comprennent notamment une indication du temps de cuisson d'un aliment, une indication de la durée de cuisson restante d'un aliment et/ou une indication de l'état de cuisson d'un aliment.

Selon un mode de réalisation de l'invention, l'unité de communication UC est également configurée pour recevoir une notification de début de cuisson en provenance du module de communication MC de l'appareil de cuisson électrique 22, et l'interface utilisateur 16 est configurée pour émettre un signal d'avertissement de début de cuisson lorsqu'une notification de début de cuisson est reçue par l'unité de communication UC, de manière à avertir un utilisateur qu'il peut disposer un aliment à cuire sur un emplacement de cuisson 24 de l'appareil de cuisson électrique 22.

Selon un mode de réalisation de l'invention, l'unité de communication UC est de plus configurée pour recevoir une notification de retournement d'aliment en provenance du module de communication MC de l'appareil de cuisson électrique 22, et l'interface utilisateur 16 est configurée pour émettre un signal d'avertissement de retournement lorsqu'une notification de retournement d'aliment est reçue par l'unité de communication UC, de manière à avertir un utilisateur qu'il doit retourner un aliment en cours de cuisson sur l'emplacement de cuisson 24 de l'appareil de cuisson électrique 22.

Selon un mode de réalisation de l'invention, l'unité de communication UC est en outre configurée pour recevoir une notification de fin de cuisson en provenance du module de communication MC de l'appareil de cuisson électrique 22, et l'interface utilisateur 16 est configurée pour émettre un signal d'avertissement de fin de cuisson lorsqu'une notification de fin de cuisson est reçue par l'unité de communication UC, de manière à avertir un utilisateur qu'il peut retirer un aliment de l'emplacement de cuisson 24 de l'appareil de cuisson électrique 22.

De façon avantageuse, l'afficheur 17 est configuré pour afficher une durée de cuisson restante d'un aliment, un état de cuisson d'un aliment, le signal d'avertissement de début de cuisson, le signal d'avertissement de retournement et le signal d'avertissement de fin de cuisson.

La pince 2 comporte de plus une unité de commande et de contrôle CC configurée pour commander et contrôler la pince 2, et pour commander et contrôler l'unité de communication UC et l'interface utilisateur 16. De façon avantageuse, l'unité de commande et de contrôle CC comporte un processeur, et par exemple un microprocesseur.

Selon le mode de réalisation représenté sur les figures 1 à 3, la pince 2 comporte également un boîtier de protection 27 monté par exemple sur le premier bras 3, et plus particulièrement dans un logement de réception 28 prévu sur la première partie de préhension 4. De façon avantageuse, la paroi de fond du logement de réception 28 est pourvue d'une ouverture 29 qui est située en regard du deuxième bras 6, et plus particulièrement de la deuxième partie de préhension 7, et à travers laquelle s'étend une portion du boîtier de protection 27 logeant le capteur à effet Hall 14. Une telle configuration du boîtier de protection 27 et du logement de réception 28 permet d'assurer une coopération optimale entre le capteur à effet Hall 14 et l'aimant permanent 15.

L'unité de commande et de contrôle CC, l'unité de communication UC, la batterie 21 et le capteur à effet Hall 14 sont avantageusement logés dans le boîtier de protection 27.

Selon le mode de réalisation représenté sur les figures, le boîtier de protection 27 est monté de manière amovible dans le logement de réception 28, afin de permettre le lavage de la pince 2 notamment dans un lave-vaisselle sans risque de détérioration de l'électronique de la pince 2. L'amovibilité du boitier de protection 27 permet également le rechargement de la batterie 21 en plaçant le boitier de protection 27 sur un socle de rechargement dédié à cet effet. Cependant, selon une variante de réalisation, le boîtier de protection 27 pourrait être étanche, et être fixé à demeure à l'un des premier et deuxième bras 3, 6, la batterie 21 pouvant alors être rechargée, de manière connue en soi, en étant branchée sur un chargeur au moyen d'un câble électrique.

Un procédé d'utilisation de la pince 2 va maintenant être décrit. Un tel procédé d'utilisation comporte les étapes suivantes :
- mise sous tension de l'appareil de cuisson électrique 22, par exemple en appuyant sur une touche ou un bouton marche/arrêt d'une interface de commande de l'appareil de cuisson électrique 22 ;
- si cela est prévu, sélection du type d'aliment à cuire au moyen de l'interface de commande ;
- si cela est encore prévu, sélection d'un degré de cuisson souhaité de l'aliment, par exemple saignant. Les températures de cuisson pourraient cependant être déterminées par l'appareil de cuisson électrique 22 en fonction du type d'aliment sélectionné ;
- si cela est encore prévu, détermination automatique de la température de préchauffage de l'appareil de cuisson électrique 22 ;
- mise sous tension de la pince 2 en appuyant sur le bouton marche/arrêt 18 de l'interface utilisateur 16 de la pince 2 ;
- appairage de la pince 2 à l'appareil de cuisson électrique 22, par exemple en appuyant sur un bouton d'appairage prévu sur l'interface utilisateur 16 de la pince 2 ;
- émission par l'appareil de cuisson électrique 22 d'une notification de début de cuisson lorsque la plaque de cuisson 23 a atteint une température de préchauffage prédéterminée en fonction du type d'aliment sélectionné, de manière à avertir un utilisateur qu'il peut disposer l'aliment à cuire sur l'emplacement de cuisson 24 de l'appareil de cuisson électrique 22. La notification de début de cuisson peut par exemple être émise à destination de l'unité de communication UC de la pince 2 et un signal de début de cuisson peut par exemple être affiché par l'interface utilisateur 16 de la pince 2. La notification de début de cuisson pourrait cependant être émise à destination d'un terminal de l'utilisateur, tel qu'un ordiphone ;
- pincement de l'aliment à cuire entre les première et deuxième parties de pincement 5, 8 de la pince 2 ;
- commande de la mesure de la caractéristique représentative de l'épaisseur de l'aliment par exemple en appuyant sur le bouton de commande 19 de l'interface utilisateur 16 de la pince 2 ;
- détermination automatique du temps de cuisson de l'aliment à partir de la caractéristique mesurée, par exemple par l'unité de commande et de contrôle CC de la pince 2 ou par l'unité de commande et de contrôle de l'appareil de cuisson électrique 22;
- mise en place de l'aliment à cuire sur la plaque de cuisson 23 de l'appareil de cuisson électrique 22 ;
- si cela est prévu, émission par l'appareil de cuisson électrique 22 d'une notification de retournement d'aliment, de manière à avertir l'utilisateur qu'il doit retourner un aliment en cours de cuisson sur l'emplacement de cuisson 24 de l'appareil de cuisson électrique 22. La notification de retournement d'aliment peut par exemple être émise à destination de l'unité de communication UC de la pince 2 et un signal de retournement peut par exemple être affiché par l'interface utilisateur 16 de la pince 2. La notification de retournement d'aliment pourrait cependant être émise à destination du terminal de l'utilisateur ;
- émission par l'appareil de cuisson électrique 22 d'une notification de fin de cuisson, de manière à avertir l'utilisateur que l'aliment est cuit et qu'il peut être retiré de l'emplacement de cuisson 24 de l'appareil de cuisson électrique 22. La notification de fin de cuisson peut par exemple être émise à destination de l'unité de communication UC de la pince 2 et un signal de fin de cuisson peut par exemple être affiché par l'interface utilisateur 16 de la pince 2. La notification de fin de cuisson pourrait cependant être émise à destination du terminal de l'utilisateur;
- mise hors tension de la pince 2 en sélectionnant le bouton marche/arrêt 18 de l'interface utilisateur 16 de la pince 2 ;
- mise hors tension de l'appareil de cuisson électrique 22 en sélectionnant la touche marche/arrêt ou en débranchant l'appareil de cuisson électrique 22.

Selon un mode de réalisation de l'invention non représenté sur les figures, la pince 2 est autonome et l'unité de commande et de contrôle CC de la pince 2 est configurée pour déterminer un temps de cuisson d'un aliment en fonction de la caractéristique mesurée par le dispositif de mesure 13 et du type d'aliment à cuire, avantageusement renseigné par l'utilisateur au moyen de l'interface utilisateur 16. Dans une variante de réalisation la pince 2 pourra être dédiée à la cuisson d'un type d'aliment particulier et ne pas comporter de moyens de sélection du type d'aliment par l'utilisateur.

Lorsque la pince 2 est autonome, elle peut également comprendre un capteur de température configuré pour mesurer une température d'un emplacement de cuisson 24 sur lequel est destiné à être disposé un aliment à cuire. Un tel capteur de température peut par exemple être fixé à l'un des premier et deuxième bras 3, 6.

Selon un tel mode de réalisation de l'invention, l'unité de commande et de contrôle CC de la pince 2 est avantageusement configurée pour déterminer le temps de cuisson d'un aliment en fonction de la caractéristique mesurée par le dispositif de mesure 13, d'une température mesurée par le capteur de température, et éventuellement du type d'aliment à cuire.

Selon un mode de réalisation de l'invention non représenté sur les figures, la pince 2 comporte un dispositif de mesure de température qui est fixé de manière amovible à l'un des premier et deuxième bras 3, 6, et qui comporte le capteur de température précité et un module de communication. Selon un tel mode de réalisation de l'invention, la pince 2 comprend avantageusement une unité de communication apte à échanger des informations avec le module de communication du dispositif de mesure de température lorsque ledit module de communication est positionné sur un emplacement de cuisson d'un appareil de cuisson.

Selon un mode de réalisation de l'invention non représenté sur les figures, le dispositif de mesure 13 pourrait comporter un potentiomètre, tel qu'un potentiomètre linéaire ou rotatif, associé à un système de démultiplication mécanique qui transforme le mouvement de pincement en mouvement de rotation ou de translation en fonction du type de potentiomètre utilisé.

Selon un autre mode de réalisation de l'invention non représenté sur les figures, le dispositif de mesure 13 pourrait comporter une jauge de contrainte située à proximité de la liaison pivot 12.

Bien entendu, la présente invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi dans une variante de réalisation, la pince pourra être utilisée en association avec un appareil de cuisson à gaz ou au charbon, ou autre source d'énergie, l'unité de communication de la pince échangeant alors des informations avec un module de communication d'un tel appareil de cuisson.

## Revendications

1. Pince (2) pour produits alimentaires, comprenant :
- un premier bras (3) comprenant une première partie de préhension (4) et une première partie de pincement (5) et un deuxième bras (6) comprenant une deuxième partie de préhension (7) et une deuxième partie de pincement (8), les première et deuxième parties de préhension (4, 7) étant montées mobiles l'une par rapport à l'autre et étant configurées pour occuper une configuration écartée dans laquelle les première et deuxième parties de pincement (5, 8) sont écartées l'une de l'autre et au moins une configuration de pincement dans laquelle les première et deuxième parties de pincement (5, 8) sont rapprochées l'une de l'autre et sont configurées pour pincer un aliment, et
- un dispositif de mesure (13) configuré pour déterminer une caractéristique représentative de l'épaisseur d'un aliment pincé entre les première et deuxième parties de pincement (5, 8),
**caractérisée en ce qu'**elle comporte un boîtier de protection monté de manière amovible sur l'un des premier et deuxième bras (3, 6), le dispositif de mesure (13) étant au moins en partie logé dans le boîtier de protection.

2. Pince (2) selon la revendication 1, dans laquelle la caractéristique déterminée par le dispositif de mesure (13) est un écartement entre les première et deuxième parties de pincement (5, 8) ou entre les première et deuxième parties de préhension (4, 7).

3. Pince (2) selon la revendication 1 ou 2, dans laquelle le dispositif de mesure (13) comporte un dispositif de détection électromagnétique.

4. Pince (2) selon la revendication 3, dans laquelle le dispositif de détection électromagnétique comporte un capteur à effet Hall (14) fixé à l'un des premier et deuxième bras (3, 6), et un aimant permanent (15) fixé à l'autre des premier et deuxième bras (3, 6).

5. Pince (2) selon l'une quelconque des revendications 1 à 4, dans laquelle les première et deuxième parties de préhension (4, 7) sont montées articulées l'une par rapport à l'autre au moyen d'une liaison pivot (12).

6. Pince (2) selon l'une quelconque des revendications 1 à 5, laquelle comporte une interface utilisateur (16) comportant un afficheur (17) et un bouton marche/arrêt (18) configuré pour commander une alimentation électrique de la pince (2).

7. Pince (2) selon l'une quelconque des revendications 1 à 6, laquelle comporte une unité de communication (UC) apte à échanger des informations avec un module de communication (MC) d'un appareil de cuisson selon un protocole de communication, l'unité de communication (UC) étant configurée pour émettre, à destination du module de communication (MC), au moins une information de mesure comprenant une indication de l'épaisseur d'un aliment pincé entre les première et deuxième parties de pincement (5, 8) ou une indication de la caractéristique mesurée.

8. Pince (2) selon l'une quelconque des revendications 1 à 7, laquelle comporte un élément de sollicitation configuré pour solliciter les première et deuxième parties de préhension (4, 7) vers la configuration écartée.

9. Système de cuisson comprenant une pince (2) selon l'une quelconque des revendications précédentes, et un appareil de cuisson électrique (22) pour la cuisson de produits alimentaires, l'appareil de cuisson électrique (22) comprenant un emplacement de cuisson (24) configuré pour recevoir un aliment et un dispositif de chauffage (25) configuré pour chauffer un aliment reçu sur l'emplacement de cuisson (24).
